(19) Europäisches Patentamt / European Patent Office / Office européen des brevets

(11) **EP 4 151 469 A1**

(12) **EUROPEAN PATENT APPLICATION**
published in accordance with Art. 153(4) EPC

(43) Date of publication:
**22.03.2023   Bulletin 2023/12**

(21) Application number: **21833387.0**

(22) Date of filing: **28.05.2021**

(51) International Patent Classification (IPC):
**B60R 19/04** (2006.01)      **B60J 5/00** (2006.01)
**F16F 7/00** (2006.01)      **F16F 7/12** (2006.01)

(52) Cooperative Patent Classification (CPC):
**B60J 5/00; B60R 19/04; F16F 7/00; F16F 7/12**

(86) International application number:
**PCT/JP2021/020528**

(87) International publication number:
**WO 2022/004221 (06.01.2022 Gazette 2022/01)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority:   **30.06.2020   JP 2020112442**

(71) Applicant: **Toray Industries, Inc.**
**Tokyo 103-8666 (JP)**

(72) Inventors:
• **GANESAN, Balamurugan**
**85375 Neufahrn b. Freising (DE)**
• **SCHMITZ, Sebastian**
**85375 Neufahrn b. Freising (DE)**
• **MIYAKE, Naoki**
**85375 Neufahrn b. Freising (DE)**

(74) Representative: **Prüfer & Partner mbB**
**Patentanwälte · Rechtsanwälte**
**Sohnckestraße 12**
**81479 München (DE)**

(54)   **IMPACT ABSORBING STRUCTURE**

(57)   This impact absorbing structure for a vehicle is characterized in being made of a metal beam and a resin crash pad installed on a side of the metal beam where an external impact is received, and in that the resin crash pad is installed within a range in the longitudinal direction of the metal beam, the range including a site which includes the longitudinal direction center of the metal beam and which receives the external impact. Impact energy from outside is suitably dispersed and transmitted across a wide range to the metal beam via the resin crash pad, which is disposed with a simple method without using an advanced bonding technology. The impact energy absorption amount is significantly increased as compared to a case with only the metal beam, and this increase in the impact energy absorption amount minimizes an increase in weight of the impact absorbing structure and is performed efficiently.

FIG.1

(A)

EP 4 151 469 A1

# FIG.1

(B)

**Description**

Technical Field of the Invention

The present invention relates to an impact absorbing structure for a vehicle, and specifically to an impact absorbing structure provided inside a door on the side of the vehicle and in front or rear of the vehicle.

Background Art of the Invention

Conventionally, some vehicles are equipped with an impact absorbing structure on the front and rear bumpers or inside the side doors to absorb the impact energy in the event of a side collision.

In Patent document 1 and Patent document 2, a composite structure in which a synthetic resin is filled un a metal member having a hollow closed cross section is described.

In Patent document 3, a vehicle body structure in which a crash box is installed between a bumper reinforcement and a rear side member is described.

In Patent document 4, an impact-absorbing bumper composed of a metal reinforcement, a skin material and an energy-absorbing material made of a synthetic polymer foam between them is described.

In Patent document 5, an example in which a carbon fiber-reinforced resin is adhered to the open surface of a bumper reinforcement on the vehicle body side is described.

Prior art documents

Patent documents

Patent document 1: Japanese Patent No. 6601749
Patent document 2: Japanese Utility Model Laid-Open HEI 4-129316
Patent document 3: JP-A-2010-100259
Patent document 4: JP-A-8-34302
Patent document 5: JP-A-2018-65452

Summary of the Invention

Problems to be solved by the Invention

In the structures described in Patent documents 1 and 2, it is difficult to insert the synthetic resin into the closed cross section of the metal member, and this difficulty becomes remarkable particularly in long structures. Further, there is a problem that the construction method is further restricted in case where the cross section perpendicular to the longitudinal direction has a complicated shape or the cross-sectional shape changes along the longitudinal direction.

In both of the structures described in Patent documents 3 and 4, it is difficult to suppress a local bending of the bumper reinforcement itself due to an external impact.

In the structure described in Patent document 5, there is a problem that in addition that an advanced technology is required for joining a metal and a resin, an expensive carbon fiber-reinforced resin must be used.

Accordingly, an object of the present invention is to provide an impact absorbing structure for a vehicle which does not require an advanced joining technology between a metal and a resin, and which is lightweight and can sufficiently absorb an impact energy with a simple construction method.

Means for solving the Problems

To achieve the above-described object, an impact absorbing structure according to the present invention is an impact absorbing structure for a vehicle, and is characterized in that the impact absorbing structure comprises a metal beam and a resin crash pad installed on a side of the metal beam where an external impact is received, and the resin crash pad is installed within a range in the longitudinal direction of the metal beam, the range including a site which includes a longitudinal direction center of the metal beam and which receives the external impact.

In such an impact absorbing structure according to the present invention, since the resin crash pad is arranged at a portion that directly receives an external impact, it becomes possible to disperse and transmit the input impact energy across a wide range to the metal beam via the resin crash pad, and by suppressing a local bending of the metal beam, it becomes possible that the metal beam is bent over a wide range, and the impact energy absorption amount by the impact absorbing structure can be increased.

In the impact absorbing structure according to the present invention, from the viewpoint that it becomes possible to increase the energy absorption amount while suppressing the increase in weight of the entire impact absorbing structure, it is desirable that a length of the resin crash pad is in a range of 1/8 to 1/2 of the total longitudinal length of the metal beam. It is more desirable to be 1/4 or less. If the resin crash pad occupies a range of more than 1/2, the overall weight may become heavy, and if it is less than 1/8, the impact energy input from the outside cannot be sufficiently dispersed, and the metal beam may cause a local bending.

Further, in the impact absorbing structure according to the present invention, it is preferred that the metal beam has an open cross section perpendicular to the longitudinal direction and has a length of 50 to 200 cm and a width of 5 cm or more. Alternatively, the impact absorbing structure according to the present invention can be applied also to a case where the metal beam has a closed cross section perpendicular to the longitudinal direction and has a length of 50 to 200 cm and a cross-sectional area of 10 cm$^2$ or more.

In the impact absorbing structure according to the present invention, it is preferred that the resin crash pad is composed of a thermoplastic resin composition, from the viewpoint of molding method.

In this case, it is preferred that the thermoplastic resin composition constituting the resin crash pad has a tensile elongation at break, measured under the following conditions, of 1% or more, in the point that it becomes possible to increase the energy absorption amount while suppressing the increase in weight of the entire impact absorbing structure equipped with the resin crash pad.

[Conditions for measurement of tensile elongation at break]

Using an ISO test piece obtained by injection molding, a tensile test is performed in accordance with ISO527-1 and -2 at a strain rate of 10 mm/min in an atmosphere at a temperature of 23°C and a humidity of 50% to measure the tensile elongation at break.

Further, separately from or together with the above-described preferred conditions for the tensile elongation at break, it is preferred that the thermoplastic resin composition constituting the resin crash pad has a flexural modulus, measured under the following conditions, of 1 to 20 GPa. Within this range, it becomes possible to increase the energy absorption amount while suppressing the increase in weight of the entire impact absorbing structure.

[Conditions for measurement of flexural modulus]

Using an ISO test piece obtained by injection molding, a bending test is performed in accordance with ISO 178 at a strain rate of 2 mm/min in an atmosphere at a temperature of 23°C and a humidity of 50% to measure the flexural modulus.

By these preferable properties of tensile elongation at break and/or flexural modulus, the resin crash pad does not cause a crack due to an external impact, and it becomes possible to sufficiently distribute the impact energy to the metal beam.

Further, in the impact absorbing structure according to the present invention, by the condition where an increase in weight $\Delta W_H$ and an increase in energy absorption amount $\Delta EA_H$ due to addition of the resin crash pad to the metal beam alone satisfy the following equation with respect to an increase in weight $\Delta W_S$ and an increase in energy absorption amount $\Delta EA_S$ due to an increase in thickness of the metal beam alone, it becomes possible to increase the energy absorption amount while suppressing the increase in weight of the entire structure.

$$\Delta EA_H / \Delta W_H > \Delta EA_S / \Delta W_S$$

here,

$$\Delta W_H = W_H - W_S \text{ (increase in weight due to addition of the crash pad to the metal beam with the same thickness)}$$

$W_H$: weight of the impact absorbing structure comprising the metal beam and the resin crash pad
$W_S$: weight of an impact absorbing structure comprising the metal beam alone

$$\Delta EA_H = EA_H - EA_S \text{ (increase in energy absorption amount due to addition of the crash pad to the metal beam with the same thickness)}$$

$EA_H$: energy absorption amount of the impact absorbing structure comprising the metal beam and the resin crash pad
$EA_S$: energy absorption amount of an impact absorbing structure comprising the metal beam alone

$$\Delta W_S = W_{SX} - W_{SY} \text{ (increase in weight due to an increase in thickness when using only the metal beam) } (X > Y)$$

$W_{SX}$: weight of an impact absorbing structure comprising a metal beam alone with a thickness of X (mm)
$W_{SY}$: weight of an impact absorbing structure comprising a metal beam alone with a thickness of Y (mm)

$$\Delta EA_S = EA_{SX} - EA_{SY} \text{ (increased in energy absorption amount due to an increase in thickness when using only the metal beam) } (X > Y)$$

$EA_{SX}$: energy absorption amount of an impact absorbing structure comprising a metal beam alone with a thickness of X (mm)
$EA_{SY}$: energy absorption amount of an impact absorbing structure comprising a metal beam alone with a thickness of Y (mm)

Such an impact absorbing structure according to the present invention is preferably installed particularly in a side door of the vehicle, but it can also be installed in front and rear parts of the vehicle.

Effect according to the Invention

According to the impact absorbing structure according to the present invention, an impact energy input from outside is suitably dispersed and transmitted across a wide range to the metal beam via the resin crash pad which is simply disposed to a site of the side that directly receives an external impact with a simple construction method without using an advanced bonding technology, and local bending of the metal beam is suppressed, enabling the metal beam to flex appropriately over the entire or wide range, whereby the impact energy absorption amount by this impact absorbing structure is significantly increased as compared to a case with only the metal beam. This increase in the impact energy absorption amount is brought about by arranging the resin crash pad at a specific part of the metal beam, and as compared to increasing the energy absorption amount by increasing the thickness of the metal beam alone, an increase in weight of the impact absorbing structure is suppressed small and it is performed extremely efficiently.

Brief explanation of the drawings

[Fig. 1] Fig. 1 shows a perspective view (A) and a side view (B) of an impact absorbing structure of a case where a metal beam has an open cross section, according to an embodiment of the present invention.
[Fig. 2] Fig. 2 shows an impact absorbing structure of a case where a metal beam has a closed cross section, according to another embodiment of the present invention, and shows perspective views of a case (A) where a metal beam has a circular cross section and a case (B) where a metal beam has an elliptical cross section.
[Fig. 3] Fig. 3 is a perspective view showing an analysis model of a case where a pole collision is added as an external impact input for analysis of energy absorption by the impact absorbing structure shown in Fig. 1.
[Fig. 4] Fig. 4 shows examples of deformation in the analysis model shown in Fig. 3, and shows schematic side views of a case (A) of a metal beam only and a case (B) provided with a resin crash pad.
[Fig. 5] Fig. 5 is a graph showing the control characteristics of the collision speed of the pole in the analysis model shown in Fig. 3.

Embodiments for carrying out the Invention

Hereinafter, the impact absorbing structure of the present invention will be explained in detail together with embodiments.

The impact absorbing structure of the present invention is installed at a location that receives an impact stress from the outside, and concretely, there are a structure installing it on bumper reinforcement parts provided to front and rear sides of a vehicle and a structure installing it on a side impact beam part provided in a side door.

(1) Metal beam:

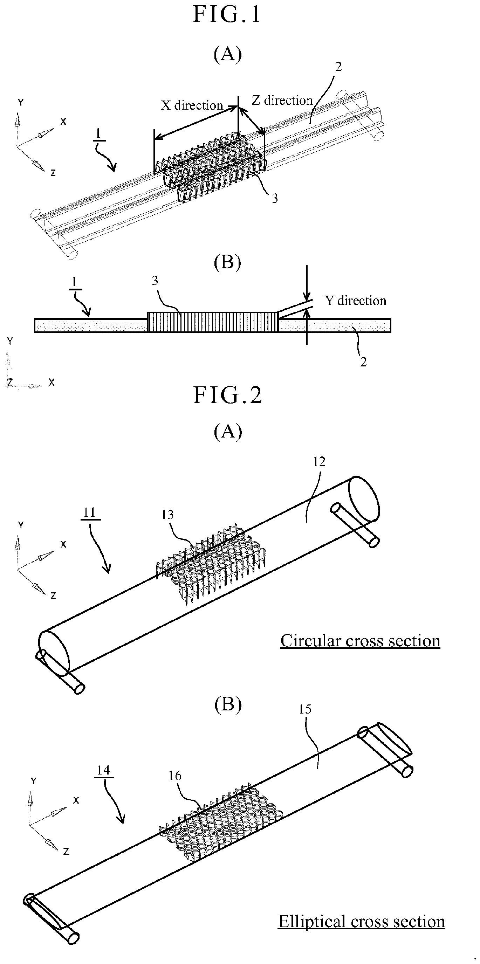

In the present invention, a member constituting the metal beam can be applied to both cases of an open cross section and a closed cross section as a cross section perpendicular to the longitudinal direction, and preferably have a length of 50 to 200 cm. In the case of an open cross section, a wavy shape such as a W shape, an H shape or a hat shape is preferably used in order to improve the moment of inertia of area, and the width is preferably 5 cm or more, and generally about 5 to 20 cm. Fig. 1 shows an example of a concrete cross-sectional shape and an example of a positional relationship with the crash pad.

In an impact absorbing structure 1 shown in Fig. 1, a resin crash pad 3 is installed on the side of a metal beam 2 that receives an external impact and has a W-shaped cross section perpendicular to the longitudinal direction as an open cross section. The resin crash pad 3 is installed within the range in the longitudinal direction of the metal beam 2 at a site that receives an external impact, including the longitudinal direction center.

On the other hand, in case where the cross section perpendicular to the longitudinal direction of the metal beam has a closed cross-sectional shape, the hollow closed cross-sectional shape includes circular, elliptical and square cross-sectional shapes, and the cross-sectional shape and cross-sectional area may change in the middle of the longitudinal direction. As a general cross-sectional area, one having a cross-sectional area of 10 cm$^2$ or more is preferably used. Fig. 2 shows examples of the concrete cross-sectional shape and examples of the positional relationship with the crash pad.

In an impact absorbing structure 11 shown in Fig. 2(A), a resin crash pad 13 is installed on the side of a metal beam 12 formed in a circular shape with a cross section perpendicular to the longitudinal direction as a closed cross-sectional shape, on the side receiving an external impact. The resin crash pad 13 is installed within the range of the metal beam 12 in the longitudinal direction, at a site of the side receiving an external impact including the longitudinal direction center.

In an impact absorbing structure 14 shown in Fig. 2(B), a resin crash pad 16 is installed on the side of a metal beam 15 formed in an elliptical shape with a cross section perpendicular to the longitudinal direction as a closed cross-sectional shape, on the side receiving an external impact. The resin crash pad 16 is installed within the range of the metal beam 15 in the longitudinal direction, at a site of the side receiving an external impact including the longitudinal direction center.

As materials for the metal beam, steels, aluminum alloys, titanium alloys, magnesium alloys, copper alloys, nickel alloys, cobalt alloys, zirconium alloys, zinc, lead, tin and alloys thereof are preferably exemplified. In particular, in case where the impact absorbing structure is used as a structure for a vehicle as in the present invention, as the materials for the metal member, high-strength high-tensile steel plates and lightweight and relatively inexpensive aluminum alloys are preferred.

(2) Resin crash pad:

In the present invention, although the shape of the resin crash pad is not particularly limited, it is preferred that the resin crash pad is provided at a position including the central portion in the longitudinal direction (X direction) of the metal beam, and its length is in a range of 1/8 to 1/2 of the total length of the metal beam. It is preferred that the height (Y direction) is in a range of 1 to 100 mm from the design allowable space, and the width (Z direction) covers 90% or more of the entire width of the metal beam (for example, Fig. 2). Further, the average thickness of the crash pad is desirably in a range of 1.0 to 5.0 mm, and therefore, it is desirable to provide a honeycomb-shaped cavity from the viewpoints of moldability and weight (weight reduction).

It is necessary that the resin crash pad is not completely cut or crushed by an external impact and the external impact does not directly act on the metal beam, and it is preferably composed of a thermoplastic resin composition from the viewpoint of the molding method.

As concrete resin materials, for example, preferably exemplified are a polyamide resin, a polyester resin, a polyphenylene sulfide resin, a polyphenylene oxide resin, a polycarbonate resin, a polylactic resin, a polyacetal resin, a polysulfone resin, a tetrafluoropolyethylene resin, a polyetherimide resin, a polyamideimide resin, a polyimide resin, a polyethersulfone resin, a polyetherketone resin, a polythioetherketone resin, a polyetheretherketone resin, a polyethylene resin, a polypropylene resin, a polystyrene resin, and styrene-based resins such as an acrylonitrile/butadiene/styrene copolymer (ABS resin) , a polyalkylene oxide resin, and the like. In addition, two or more of these may be mixed to form an alloy (mixture) as long as the properties are not impaired.

Among the above-described resin materials, a polyamide resin, a polyester resin, a polyphenylene sulfide resin, a polyphenylene oxide resin, a polycarbonate resin, an ABS resin, and a polypropylene resin are preferably used. In particular, a polyamide resin, a polyamide/polyolefin alloy resin, and a polycarbonate/polybutylene terephthalate alloy resin are preferred because of their excellent balance between tensile strength and tensile elongation.

The thermoplastic resin composition of the resin crash pad in the present invention preferably has a tensile elongation at break of 1% or more from the viewpoint of excellent energy absorption performance of the impact absorbing structure provided with the resin crash pad. 2% or more is more preferable, and 5% or more is most preferable. It is preferably 200% or less, more preferably 100% or less.

The thermoplastic resin composition of the resin crash pad in the present invention preferably has a flexural modulus of 1 GPa or more, more preferably 2 GPa or more, in the point that the energy absorption amount per weight increase of the impact absorbing structure provided with the resin crash pad is high. Further, it is preferably 20 GPa or less, more preferably 10 GPa or less.

Although the thermoplastic resin composition of the resin crash pad preferably has a tensile elongation at break of 1% or more and a flexural modulus of 1 to 20 GPa, one having a high tensile elongation at break and a high flexural modulus is preferable. Concretely, it is more preferred that the tensile elongation at break is 2% or more and the flexural modulus is 2 to 10 GPa.

It is possible to blend 10 to 100 parts by weight of fibrous filler with respect to 100 parts by weight of the thermoplastic resin within the range that satisfies the above-described properties. A range of 20 to 90 parts by weight is more preferred, and a range of 30 to 80 parts by weight is further preferred and is particularly preferred for achieving both mechanical strength and moldability.

As concrete fibrous fillers, exemplified are a glass fiber, a carbon fiber, a potassium titanate whisker, a calcium carbonate whisker, a wollastonite whisker, an aluminum borate whisker, an aramid fiber, an alumina fiber, a silicon carbide fiber, an asbestos fiber, and a gypsum fiber, and these can be used in combination of two or more. Further, pretreatment of these fibrous fillers with a coupling agent such as an isocyanate-based compound, an organic silane-based compound, an organic titanate-based compound, an organic borane-based compound or an epoxy compound is preferable from the viewpoint of obtaining a more excellent mechanical strength. Among them, a glass fiber is most preferably used.

The resin crash pad in the present invention is made by molding a resin composition. As the molding method, a molding method using a mold is preferable, and various molding methods such as injection molding, extrusion molding and press molding can be used. In particular, by a molding method using an injection molding machine, it is possible to continuously obtain stable molded articles. Although the conditions for the injection molding are not particularly limited, for example, a condition of injection time: 0.5 seconds to 10 seconds, back pressure: 0.1 MPa to 10 MPa, holding pressure: 1 MPa to 50 MPa, holding pressure time: 1 second to 20 seconds, cylinder temperature: 200°C to 340°C, and mold temperature: 20°C to 150°C is preferred. Here, the cylinder temperature indicates a temperature of the part of the injection molding machine that heats and melts the molding material, and the mold temperature indicates a temperature of the mold into which the resin is injected to form a desired shape. By appropriately selecting these conditions, particularly the injection time, the injection pressure (back pressure and holding pressure), and the mold temperature, it is possible to appropriately adjust the appearance of the resin crash pad, sink marks and warpage.

(3) Joining:

When an external impact is inputted, because the resin crash pad is stressed so as to be pressed in the direction of the metal beam, a strong joint is not required. In the range of normal use, the crash pad may be joined within the range where it does not fall off from the metal beam.

As the joining method, an adhesive, bolt fastening, a method of inserting a metal beam into the mold and overmolding the crash pad, and the like can be employed. Moreover, it is also possible to join them after chemically or physically treating the surface of the metal beam.

Examples

By showing Examples hereinafter, the present invention will be explained in more detail, but the present invention is not limited to the description of these examples. First, the materials used in these examples and methods for evaluating various properties will be explained.

(1) Analysis software and constraint conditions:

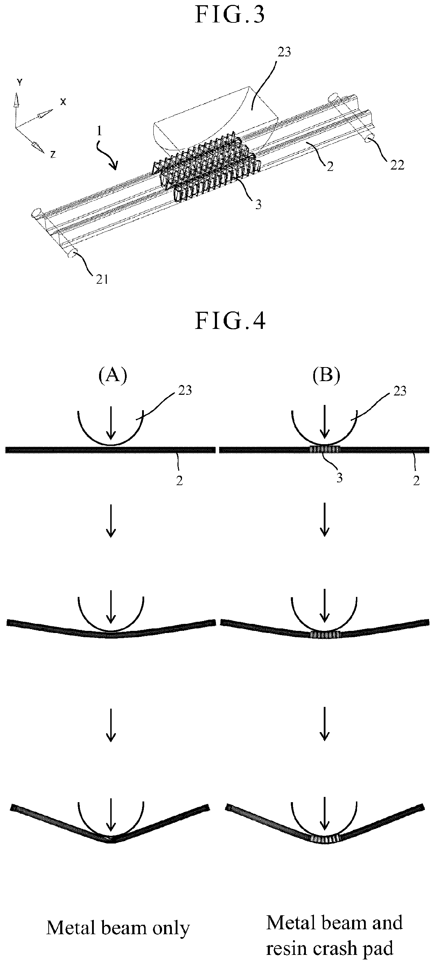

Analysis software: LS-DYNA version R10.1 supplied by Livermore Software Technology Corporation
Constraint conditions: As shown in Fig. 3, a structure (structure 1) comprising the metal beam 2 and the resin crash pad 3 was supported by two fulcrums 21 and 22, and set to be movable in the X and Y directions, and to be positionally fixed in the Z direction. The collision of the pole 23 was added as an external impact input, and the pole intrusion amount (distance) and the energy absorption amount of the structure at that time were analysed.

Fig. 4 shows examples of the analysis in a case of the metal beam only and a case where a crash pad made of PC/PBT (polycarbonate resin/polybutylene terephthalate resin) are provided. In either case, the metal beam bends due to the external impact, while the metal beam alone (Fig. 4(A)) causes a local bending, by providing the crash pad (Fig. 4(B)), it is understood that the external impact energy is dispersed and transmitted over a wide range of the beam, and a local bending is suppressed.

(2) Pole for applying external impact:

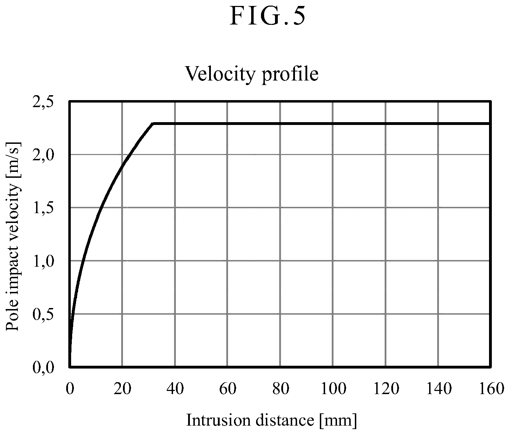

The pole diameter is 305mm. The initial velocity of the collision is referred to be 0 when the pole contacts the metal beam or crash pad, and therefrom, as the velocity profile is shown in Fig. 5, the horizontal axis is taken as the intrusion distance of the pole, while increasing the pole impact velocity, it is maintained as a constant velocity at 2.3 m/sec.

(3) Metal beam:

It is made of a ultra-high tensile steel, length = 1000 mm, width = 127 mm, height: 30 mm, cross section: W shape. Thicknesses are 1.0, 1.3 and 1.5mm. Ultimate tensile strength (UTS) = 1500 MPa, and Yield stress (YS) = 1100 MPa.

(4) Resin crash pad:

A honeycomb shape with a width of 125 mm, a height of 35 mm and an average thickness of 3 mm.

(5) Resin material:

·PC/PBT: alloy material of a polycarbonate resin and a polybutylene terephthalate resin, grade name "8207X01B" (supplied by Toray Industries, Inc.), tensile elongation at break = 50%, flexural modulus = 2.3 GPa.
·PA66: 30% glass fiber-reinforced polyamide 66 resin, grade name "CM3001G30" (supplied by Toray Industries, Inc.), tensile elongation at break = 2.5%, flexural modulus = 9.5 GPa.
·PPS resin: filler-reinforced polyphenylene sulfide resin, grade name "A310MX04" (supplied by Toray Industries, Inc.), tensile elongation at break = 0.9%, flexural modulus = 22 GPa.
·Foam material: polyurethane resin foam having a tensile elongation at break of 95% and a flexural modulus of 100 MPa.
·CF-SMC: thermosetting carbon fiber-reinforced sheet molding compound supplied by Toray Industries, Inc., tensile elongation at break = 0.9%, flexural modulus = 37 GPa.

(6) Evaluation of tensile elongation:

For PC/PBT, PA66 and PPS resin, using ISO test pieces prepared by injection molding, based on ISO527-1 (2012) and ISO527-2 (2012), a tensile test was performed at a strain rate of 10 mm/min in an atmosphere of a temperature of 23°C and a humidity of 50% to measure the tensile elongation at break.
For the foam material, using an ISO test piece prepared by foam molding, based on ISO 1798 (2008), a tensile test was performed at a strain rate of 10 mm/min in an atmosphere of a temperature of 23°C and a humidity of 50% to measure the tensile elongation at break.
For CF-SMC, using a test piece prepared by press molding, based on ISO527-1 (2012) and ISO527-4 (1997), a tensile test was performed at a strain rate of 2 mm/min in an atmosphere of a temperature of 23°C and a humidity of 50% to measure the tensile elongation at break.

(7) Evaluation of flexural modulus:

For PC/PBT, PA66 and PPS resin, using ISO test pieces prepared by injection molding, based on ISO 178 (2010), a bending test was performed at a strain rate of 2 mm/min in an atmosphere of a temperature of 23°C and a humidity of 50% to measure the flexural modulus.

For the foam material, using an ISO test piece prepared by foam molding, based on ISO 178 (2010), a bending test was performed at a strain rate of 2 mm/min in an atmosphere of a temperature of 23°C and a humidity of 50% to measure the flexural modulus.

For CF-SMC, using an ISO test piece prepared by press molding, based on ISO 14125 (1998), a bending test was performed at a strain rate of 2 mm/min in an atmosphere of a temperature of 23°C and a humidity of 50% to measure the flexural modulus.

(Comparative Examples 1, 2, 3)

Table 1 shows the weights and the energy absorption amounts analysed for single steel beams with thicknesses of 1.0, 1.3 and 1.5 mm. As the thickness increases, the weight and the energy absorption amount increase. At that time, increase in energy absorption amount per increase in weight $\Delta EA_S/\Delta W_S$ is 1.0 for both 1.3 mm thickness and 1.5 mm thickness, based on that for 1 mm thickness.

(Examples 1 and 2)

The weight and energy absorption amount were analysed in case where a PC/PBT crash pad was provided on the impact side of a steel beam having a thickness of 1.0 mm (Table 2). At that time, increase in energy absorption amount per increase in weight $\Delta EA_H/\Delta W_H$ was 2.2 at 1/4 of the crash pad length and 2.9 at 1/8 of the crash pad length, based on Comparative Example 1 of steel only having the same thickness, and any one of them is high as compared to the steel only.

(Examples 3, 4, 10)

The weight and energy absorption amount were analysed in case where a PC/PBT crash pad was provided on the impact side of a steel beam having a thickness of 1.3 mm (Table 3). At that time, increase in energy absorption amount per increase in weight $\Delta EA_H/\Delta W_H$ was 2.6 at 1/4 of the crash pad length, 4.6 at 1/8 of the crash pad length, and 2.1 at 1/16 of the crash pad length, based on Comparative Example 2 of steel only having the same thickness, and any one of them is high as compared to the steel only.

(Examples 5, 6, 7, 12)

The weight and energy absorption amount were analysed in case where a PC/PBT crash pad was provided on the impact side of a steel beam having a thickness of 1.5 mm (Table 4). At that time, increase in energy absorption amount per increase in weight $\Delta EA_H/\Delta W_H$ was 1.3 at 1/2 of the crash pad length, 2.7 at 1/4 of the crash pad length, 4.8 at 1/8 of the crash pad length, and 2.2 at 1/16 of the crash pad length, based on Comparative Example 3 of steel only having the same thickness, and any one of them is high as compared to the steel only.

(Example 8)

The weight and energy absorption amount were analysed in case where a PA66 crash pad was provided on the impact side of a steel beam having a thickness of 1.5 mm (Table 4). At that time, increase in energy absorption amount per increase in weight $\Delta EA_H/\Delta W_H$ was 2.5 at 1/4 of the crash pad length, based on Comparative Example 3 of the steel only having the same thickness, and it is high as compared to the steel only.

(Example 9)

The weight and energy absorption amount were analysed in case where a PC/PBT crash pad was provided on the impact side of a steel beam having a thickness of 1.5 mm without being joined to the metal beam (Table 4). At that time, increase in energy absorption amount per increase in weight $\Delta EA_H/\Delta W_H$ was 2.6 at 1/4 of the crash pad length, based on Comparative Example 3 of the steel only having the same thickness, and it is high as compared to the steel only.

(Example 11)

The weight and energy absorption amount were analysed in case where a crash pad made of PPS resin A310MX04 supplied by Toray Industries, Inc. was provided on the impact side of a steel beam having a thickness of 1.5 mm (Table 4). At that time, increase in energy absorption amount per increase in weight $\Delta EA_H/\Delta W_H$ was 1.0 at 1/4 of the crash pad length, based on Comparative Example 3 of the steel only having the same thickness, and it is equivalent to that of the steel.

(Reference Example 1)

As a result of analysing the weight and energy absorption amount in case where a urethane foam crash pad was provided on the impact side of a steel beam having a thickness of 1.5 mm (Table 4), improvement in the energy absorption amount due to the crash pad was not shown.

(Reference Example 2)

The weight and energy absorption amount were analysed in case where a CF-SMC crash pad was provided on the impact side of a steel beam having a thickness of 1.5 mm (Table 4). At that time, increase in energy absorption amount per increase in weight $\Delta EA_H/\Delta W_H$ was 0.9 at 1/4 of the crash pad length, based on Comparative Example 3 of the steel only having the same thickness, and it is low as compared to the steel only.

(Comparative Example 4)

As a result of analysing the weight and energy absorption amount in case where a PC/PBT crash pad was provided on the opposite impact side of a steel beam having a thickness of 1.5 mm (Table 4), improvement in the energy absorption amount due to the crash pad was not shown.

[Table 1]

| [Metal beam only] | | | | | | | | |
|---|---|---|---|---|---|---|---|---|
| | Thickness of steel (mm) | crash pad | Length of | Position of crash pad | Energy absorption amount (J) | Increase in energy absorption amount $\Delta EA_S$ | Weight (g) | Increase in weight $\Delta W_S$ | $\Delta EA_S/\Delta W_S$ |
| Comparative Example 1 | 1.0 | none | - | - | 901 | - | 1561 | - | - |
| Comparative Example 2 | 1.3 | none | - | - | 1,374 | 472 | 2030 | 469 | 1.0 |
| Comparative Example 3 | 1.5 | none | - | - | 1,707 | 806 | 2342 | 781 | 1.0 |

[Table 2]

| [Metal beam + Resin crash pad (Metal thickness = 1.0mm)] | | | | | | | | | |
|---|---|---|---|---|---|---|---|---|---|
| | Thickness of steel (mm) | crash pad | Length of crash pad | Position of crash pad | Energy absorption amount (J) | Increase in energy absorption amount $\Delta EA_H$ | Weight (g) | Increase in Weight $\Delta W_H$ | $\Delta EA_H / \Delta W_H$ |
| Comparative Example 1 | 1.0 | none | - | - | 901 | - | 1561 | - | - |
| Example 1 | 1.0 | PC/PBT | 1/4 | impact side | 1,540 | 638 | 1849 | 288 | 2.2 |
| Example 2 | 1.0 | PC/PBT | 1/8 | impact side | 1,366 | 465 | 1720 | 159 | 2.9 |

[Table 3]

[Metal beam + Resin crash pad (Metal thickness = 1.3mm)]

| | Thickness of steel (mm) | crash pad | Length of crash pad | Position of crash pad | Energy absorption amount (J) | Increase in energy absorption amount $\Delta EA_H$ | Weight (g) | Increase in weight $\Delta W_H$ | $\Delta EA_H / \Delta W_H$ |
|---|---|---|---|---|---|---|---|---|---|
| Comparative Example 2 | 1.3 | none | - | - | 1,374 | - | 2030 | - | - |
| Example 3 | 1.3 | PC/PBT | 1/4 | impact side | 2,122 | 749 | 2318 | 288 | 2.6 |
| Example 4 | 1.3 | PC/PBT | 118 | impact side | 2,110 | 737 | 2189 | 159 | 4.6 |
| Example 10 | 1.3 | PC/PBT | 1/16 | impact side | 1,547 | 173 | 2114 | 84 | 2.1 |

13

[Table 4]

| [Metal beam + Resin crash pad (Metal thickness = 1.5mm)] | | | | | | | | | |
|---|---|---|---|---|---|---|---|---|---|
| | Thickness of steel (mm) | crash pad | Length of crash pad | Position of crash pad | Energy absorption amount (J) | Increase in energy absorption amount $\Delta EA_H$ | Weight (g) | Increase in weight $\Delta W_H$ | $\Delta EA_H / \Delta W_H$ |
| Comparative Example 3 | 1.5 | none | - | - | 1,707 | - | 2342 | - | - |
| Example 5 | 1.5 | PC/PBT | 1/2 | impact side | 2,458 | 751 | 2908 | 566 | 1.3 |
| Example 6 | 1.5 | PC/PBT | 1/4 | impact side | 2,487 | 780 | 2630 | 288 | 2.7 |
| Example 7 | 1.5 | PC/PBT | 1/8 | impact side | 2,466 | 759 | 2501 | 159 | 4.8 |
| Example 8 | 1.5 | PA6 GF30% | 1/4 | impact side | 2,523 | 816 | 2663 | 321 | 2.5 |
| Example 9 | 1.5 | PC/PBT | 1/4 | impact side (not joined) | 2,443 | 736 | 2630 | 288 | 2.6 |
| Reference Exampl 1 | 1.5 | Foam | 114 | impact side | 1,707 | 1,707 | 2351 | 2,351 | 0.7 |
| Reference Exampl 2 | 1.5 | CF-SMC | 1/4 | impact side | 2,014 | 2,014 | 2682 | 2,682 | 0.8 |
| Comparative Example 4 | 1.5 | PC/PBT | 1/4 | opposite impact side | 1,707 | 0 | 2583 | 241 | 0.0 |
| Example 11 | 1.5 | PPS MD60% | 1/4 | impact side | 2,304 | 597 | 2750 | 408 | 1.5 |
| Example 12 | 1.5 | PC/PBT | 1116 | impact side | 1,893 | 186 | 2427 | 85 | 2.2 |

EP 4 151 469 A1

Thus, by providing a predetermined resin crash pad at the site specified in the present invention for the metal beam, a high impact energy absorption performance was obtained while suppressing a weight increase.

Industrial Applicability

The impact absorbing structure according to the present invention can be applied to any part of a vehicle, such as front and rear parts and side parts, where impact absorption is required, and is particularly suitable for being installed inside the side door of the vehicle.

Explanation of symbols

1, 11, 14: impact absorbing structure
2, 12, 15: metal beam
3, 13, 16: resin crash pad
21, 22: fulcrum
23: pole

**Claims**

1.  An impact absorbing structure for a vehicle **characterized in that** the impact absorbing structure comprises a metal beam and a resin crash pad installed on a side of the metal beam where an external impact is received, and the resin crash pad is installed within a range in the longitudinal direction of the metal beam, the range including a site which includes a longitudinal direction center of the metal beam and which receives the external impact.

2.  The impact absorbing structure according to claim 1, wherein a length of the resin crash pad is in a range of 1/8 to 1/2 of the total longitudinal length of the metal beam.

3.  The impact absorbing structure according to claim 1 or 2, wherein the metal beam has an open cross section perpendicular to the longitudinal direction and has a length of 50 to 200 cm and a width of 5 cm or more.

4.  The impact absorbing structure according to claim 1 or 2, wherein the metal beam has a closed cross section perpendicular to the longitudinal direction and has a length of 50 to 200 cm and a cross-sectional area of 10 $cm^2$ or more.

5.  The impact absorbing structure according to any one of claims 1 to 4, wherein the resin crash pad is composed of a thermoplastic resin composition.

6.  The impact absorbing structure according to claim 5, wherein the thermoplastic resin composition constituting the resin crash pad has a tensile elongation at break, measured under the following conditions, of 1% or more.
    [Conditions for measurement of tensile elongation at break]
    Using an ISO test piece obtained by injection molding, a tensile test is performed in accordance with ISO527-1 and -2 at a strain rate of 10 mm/min in an atmosphere at a temperature of 23°C and a humidity of 50% to measure the tensile elongation at break.

7.  The impact absorbing structure according to claim 5 or 6, wherein the thermoplastic resin composition constituting the resin crash pad has a flexural modulus, measured under the following conditions, of 1 to 20 GPa.
    [Conditions for measurement of flexural modulus]
    Using an ISO test piece obtained by injection molding, a bending test is performed in accordance with ISO 178 at a strain rate of 2 mm/min in an atmosphere at a temperature of 23°C and a humidity of 50% to measure the flexural modulus.

8.  The impact absorbing structure according to any one of claims 1 to 7, wherein an increase in weight $\Delta W_H$ and an increase in energy absorption amount $\Delta EA_H$ due to addition of the resin crash pad to the metal beam alone satisfy the following equation with respect to an increase in weight $\Delta Ws$ and an increase in energy absorption amount $\Delta EA_S$ due to an increase in thickness of the metal beam alone.

$$\Delta EA_H / \Delta W_H > \Delta EA_S / \Delta W_S$$

here,

$\Delta W_H = W_H - W_S$ (increase in weight due to addition of the crash pad to the metal beam with the same thickness)

$W_H$: weight of the impact absorbing structure comprising the metal beam and the resin crash pad
$W_S$: weight of an impact absorbing structure comprising the metal beam alone

$\Delta EA_H = EA_H - EA_S$ (increase in energy absorption amount due to addition of the crash pad to the metal beam with the same thickness)

$EA_H$: energy absorption amount of the impact absorbing structure comprising the metal beam and the resin crash pad
$EA_S$: energy absorption amount of an impact absorbing structure comprising the metal beam alone

$\Delta W_S = W_{SX} - W_{SY}$ (increase in weight due to an increase in thickness when using only the metal beam) (X > Y)

$W_{SX}$: weight of an impact absorbing structure comprising a metal beam alone with a thickness of X (mm)
$W_{SY}$: weight of an impact absorbing structure comprising a metal beam alone with a thickness of Y (mm)

$\Delta EA_S = EA_{SX} - EA_{SY}$ (increased in energy absorption amount due to an increase in thickness when using only the metal beam) (X > Y)

$EA_{SX}$: energy absorption amount of an impact absorbing structure comprising a metal beam alone with a thickness of X (mm)
$EA_{SY}$: energy absorption amount of an impact absorbing structure comprising a metal beam alone with a thickness of Y (mm)

9. The impact absorbing structure according to any one of claims 1 to 8, installed in a side door of a vehicle.

# FIG. 1

## (A)

X direction   Z direction

2

1

3

## (B)

1   3   Y direction

2

# FIG. 2

## (A)

12

11   13

Circular cross section

## (B)

15

14   16

Elliptical cross section

# FIG.3

# FIG.4

(A)

(B)

Metal beam only

Metal beam and
resin crash pad

# FIG.5

Velocity profile

# INTERNATIONAL SEARCH REPORT

| International application No. |
|---|
| PCT/JP2021/020528 |

**A. CLASSIFICATION OF SUBJECT MATTER**
Int. Cl. B60R19/04(2006.01)i, B60J5/00(2006.01)i, F16F7/00(2006.01)i, F16F7/12(2006.01)i
FI: B60R19/04 M, B60J5/00 Q, F16F7/00 K, F16F7/12, F16F7/00 J
According to International Patent Classification (IPC) or to both national classification and IPC

**B. FIELDS SEARCHED**

Minimum documentation searched (classification system followed by classification symbols)
Int. Cl. B60R19/04, B60J5/00, F16F7/00, F16F7/12

Documentation searched other than minimum documentation to the extent that such documents are included in the fields searched
Published examined utility model applications of Japan       1922-1996
Published unexamined utility model applications of Japan     1971-2021
Registered utility model specifications of Japan             1996-2021
Published registered utility model applications of Japan     1994-2021

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X<br>A | JP 2005-536392 A (GENERAL ELECTRIC CO.) 02 December 2005 (2005-12-02), claims, paragraphs [0006]-[0017], fig. 1-4 | 1, 4-5<br>2-3, 6-9 |
| X<br>A | JP 58-20406 Y2 (HASHIMOTO FORMING INDUSTRIES CO., LTD.) 27 April 1983 (1983-04-27), claims, column 3, lines 8-28, fig. 1, 2 | 1-3, 5, 9<br>4, 6-8 |
| X<br>A | JP 5-246243 A (NISSAN MOTOR CO., LTD.) 24 September 1993 (1993-09-24), claims, paragraphs [0010]-[0012], fig. 4-6 | 1-2, 4-5, 9<br>3, 6-8 |

| ☐ Further documents are listed in the continuation of Box C. | ☒ See patent family annex. |
|---|---|

\*    Special categories of cited documents:
"A"   document defining the general state of the art which is not considered to be of particular relevance
"E"   earlier application or patent but published on or after the international filing date
"L"   document which may throw doubts on priority claim(s) or which is cited to establish the publication date of another citation or other special reason (as specified)
"O"   document referring to an oral disclosure, use, exhibition or other means
"P"   document published prior to the international filing date but later than the priority date claimed

"T"   later document published after the international filing date or priority date and not in conflict with the application but cited to understand the principle or theory underlying the invention
"X"   document of particular relevance; the claimed invention cannot be considered novel or cannot be considered to involve an inventive step when the document is taken alone
"Y"   document of particular relevance; the claimed invention cannot be considered to involve an inventive step when the document is combined with one or more other such documents, such combination being obvious to a person skilled in the art
"&"   document member of the same patent family

| Date of the actual completion of the international search<br>27.07.2021 | Date of mailing of the international search report<br>10.08.2021 |
|---|---|
| Name and mailing address of the ISA/<br>　　　Japan Patent Office<br>　　　3-4-3, Kasumigaseki, Chiyoda-ku,<br>　　　Tokyo 100-8915, Japan | Authorized officer<br><br>Telephone No. |

Form PCT/ISA/210 (second sheet) (January 2015)

INTERNATIONAL SEARCH REPORT

Information on patent family members

| International application No. |
| --- |
| PCT/JP2021/020528 |

| Patent Documents referred to in the Report | Publication Date | Patent Family | Publication Date |
| --- | --- | --- | --- |
| JP 2005-536392 A | 02.12.2005 | (Family: none) | |
| JP 58-20406 Y2 | 27.04.1983 | (Family: none) | |
| JP 5-246243 A | 24.09.1993 | (Family: none) | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 6601749 B
- JP 4129316 U
- JP 2010100259 A
- JP 8034302 A
- JP 2018065452 A